# EUROPEAN PATENT APPLICATION

(11) **EP 4 253 831 A1**
(43) Date of publication of application: **04.10.2023**
(21) Application number: 22165636.6
(22) Date of filing: 30.03.2022
(51) Int. Cl.: F21S 43/16, F21S 43/243, F21S 43/245, F21S 43/247, B60Q 3/64

(54) **AUTOMOTIVE LUMINOUS DEVICE**

(71) Applicant: Valeo Vision, 93012 Bobigny Cedex (FR)
(72) Inventor: SANTAELLA HERNANDEZ, Juan Jose, 23600 Martos (ES); ILLAN CABEZA, Antonio Domingo, 23600 Martos (ES)
(74) Representative: Valeo Visibility

(57) **Abstract**

The present invention refers to an automotive luminous device (1, 11) comprising a light source (2, 12), an optical element (3, 13) and a wavelength conversion layer (6, 16, 22). The optical element (3, 13) is configured to receive the light emitted from the light source (2, 12) and to project the light in at least two different light projection portions (4, 5, 14, 15, 21). The wavelength conversion layer (6, 16, 22) is arranged at least in one of the light projection portions (4, 5, 14, 15, 21), so that the light emitted by the light source (2, 12) produces two different projections in two different wavelengths.

## Description

### TECHNICAL FIELD

This invention belongs to the field of electronic assemblies comprised within the automotive luminous devices, intended to provide luminous functions to the vehicles.

### STATE OF THE ART

Automotive lighting market can be considered one of the most competitive ones and new lighting functionalities are constantly required.

In some cases, when different colours are to be output from a single lighting module, more than one different light source is to be provided.

This is the case, for example, of those lighting devices which provide different lighting functions, such as daytime running lamp, turning indicator lamp, position light, etc. Further, a different colour may be requested by the car manufacturer due to different criteria.

The present invention provides an arrangement to provide a lighting device for an automotive vehicle, which is able to project light in at least two different colours using a single light source.

### DESCRIPTION OF THE INVENTION

The invention provides an alternative solution for providing different colours with a single light source in an automotive luminous device by an automotive luminous device comprising
a light source
an optical element receiving the light emitted from the light source and projecting the light in at least two different light projection portions
a wavelength conversion layer arranged at least in one of the light projection portions, so that the light emitted by the light source produces two different projections in two different wavelengths.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements which are useful for transforming the light beams emitted by the light source into an acceptable light pattern for the functionality chosen for the lighting device. All of these optical elements define a focus, which is the point where the light emitted by the light source is most effectively transmitted by the optical element.

The wavelength conversion layers are only in charge of providing the suitable colour for the lighting functionality, but do not provide the luminous flux necessary to fulfil the regulations. The light power is provided by the light sources, not by the wavelength conversion layer. However, the wavelength conversion layer may introduce some power losses when converting the light to a different wavelength, depending on the nature of the chosen layer.

With this arrangement, light may be projected with different colours using just one light source, which is helpful in some circumstances where different lighting or signalling functions require different colours, but can be done with a single light source.

In some particular embodiments, the light source is a solid-state light source configured to emit light in a blue, deep blue or ultraviolet wavelength.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

With this arrangement, light is emitted in a first wavelength, instead of a mixture of different wavelengths such as a white light. Blue is a common option, but other wavelengths such as deep blue or even ultraviolet could also be used without any issue. Even if this light is diffracted, due to the fact that the source light is emitted in a single wavelength, the resulting beam pattern is not an uncontrolled mixture of different colours. The wavelength conversion layer modifies the wavelength of this resulting beam pattern so that it complies with the automotive regulations of the specific functionality. When blue light sources are used and a white light is required, red and green quantum dots are used, but depending on the wavelength of the light source and the desired final colour, different quantum dots will be used.

In some particular embodiments, the wavelength conversion layer comprises quantum dots arranged to receive light projected by the optical elements.

A quantum dot is an electronic structure obtained out of a semiconductor nanocrystal, with a size such that their electrons and holes are confined in all three spatial dimensions. Depending on the particular sizes of the quantum dots, they emit light in a particular wavelength (bandgap) when they are excited, either electrically or luminescently. As a consequence, "red" quantum dots would be quantum dots which emit light in the red bandgap when excited, "green" quantum dots would be quantum dots which emit light in the green bandgap when excited, etc. However, when they are not excited, they may not be visible. This is because quantum dots are deposited in a nanometric layer using a thin film deposition technology. By controlling the amount and density of the quantum dots, this layer could be not visible when not excited either by an electric or by a luminescent stimulator.

These quantum dots are an advantageous solution since they provide flexibility in the design of the automotive lighting devices, allowing new ways of designing the different functionalities of a lighting device: lighting, indicating, signalling.

In some particular embodiments, the quantum dots are deposited on a substrate layer.

This substrate layer may be deposited in the interior or exterior of the optical element, to modify the colour that each portion of this lightguide projects to the exterior.

In some particular embodiments, the optical element is a lightguide.

A lightguide is especially optimized to contribute to many of the lighting functions of an automotive vehicle.

In some particular embodiments, the lightguide comprises a lateral surface and an edge surface, wherein the direction of light projection in the edge surface is perpendicular to any direction of the light projection in the lateral surface. In some particular embodiments, the light source contributes with the edge of the lightguide to perform a daytime running lamp functionality.

The edge surface is usually oriented forwards, so it is advantageously used to provide the daytime running lamp functionality.

In some particular embodiments, the lightguide comprises a lateral surface, the first light projection portion is a first portion of the lateral surface of the lightguide, and the second light projection portion is a second portion of the lateral surface of the lightguide. In some particular embodiments, the lateral surface of the lightguide comprises a further third portion, and a further second wavelength conversion layer is arranged in the third portion of the lightguide.

The lateral surface may be as long as needed, and there may be different wavelength conversion layers arranged on different portions of the lateral surface, therefore projecting different colours with a single light source.

In some particular embodiments, the light source contributes with the lateral surface of the lightguide to perform an interior lighting functionality.

The lightguide may also be prepared to contribute to an interior lighting function. In this case, the wavelength conversion layer may be used to modify the projected colour of some portion of the light guide, but using a single light source, as in the rest of the invention.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a first embodiment of an automotive luminous device according to the invention.
Figure 2 shows a second embodiment of an automotive luminous device according to the invention.

In these figures, the following reference numbers have been used:
- 1: First automotive lighting device
- 2: LED
- 3: Lightguide
- 4: Lateral surface of the lightguide
- 5: Edge surface of the lightguide
- 6: First quantum dot layer
- 11: Second automotive lighting device
- 12: LED
- 13: Lightguide
- 14: First portion of the lateral surface of the lightguide
- 15: Second portion of the lateral surface of the lightguide
- 16: Second quantum dot layer
- 21: Third portion of the lateral surface of the lightguide
- 22: Third quantum dot layer

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

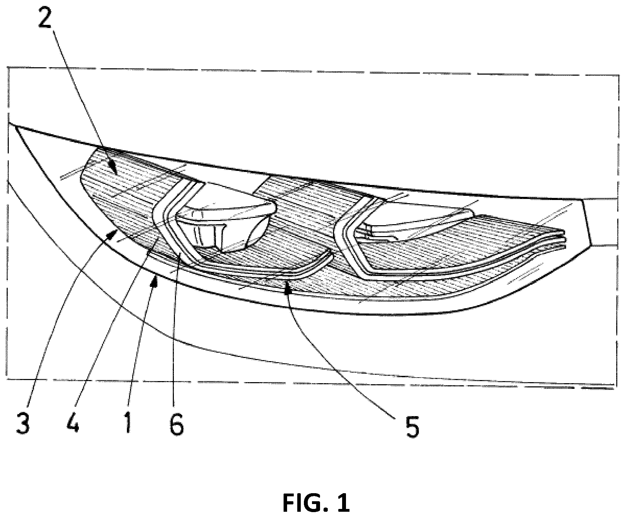

Figure 1 shows a first embodiment of an automotive luminous device 1 according to the invention.

This luminous device 1 comprises a light source 2, a lightguide 3 and a quantum dot layer 6.

The light source 2 is a LED which is configured to emit light in a blue wavelength. This wavelength is not used in current regulatory lighting functions, but may be desired by the car manufacturer for any reason.

The lightguide comprises a lateral portion 4 and an edge portion 5. The edge portion 5 is arranged at the front of the lighting device, prepared to project light in the forwarding direction of the vehicle.

The blue light is projected by the lateral surface 4 of the lightguide, so that there is a blue contour in this lightguide, when the automotive luminous device is seen from the front. In the edge portion 5 of the lightguide, which is seen perpendicularly from the front, a first quantum dot layer 6 is deposited, to change the wavelength of the blue light received by this edge portion and transform it into a white light which is acceptable by current regulations.

This quantum dot layer may comprise, in some embodiments, quantum dots deposited on a substrate layer, and then the substrate layer with the quantum dots is deposited on the edge portion of the lightguide.

As a consequence, with a single LED, two different lighting functions are achieved. In this case, the lateral surface projection could not be considered as a regulatory lighting function, but in any case, it produces a lighting effect which is desirable, for example, as a welcome lighting function.

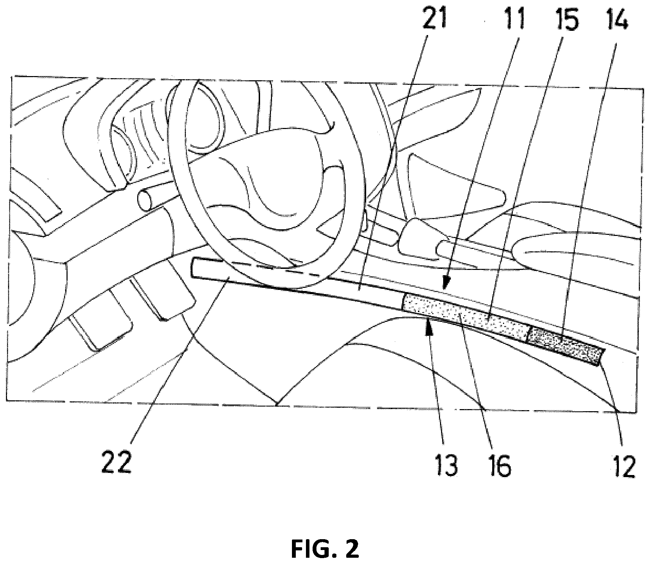

Figure 2 shows a second embodiment of an automotive luminous device 11 according to the invention.

This luminous device 11 comprises a light source 12, a lightguide 13 and a pair of quantum dot layers 16, 22.

The light source 12 is a LED which is configured to emit light in a blue wavelength. Hence, this light source is able to excite a wide range of quantum dots by a down-conversion process.

The lightguide comprises a lateral surface which is divided into three portions 14, 15, 21. These three portions are located near the gear shifter and project light to different zones of the interior of the vehicle.

The blue light is projected by the first portion 14 of the lightguide, since this portion does not comprise any quantum dot film. In a second portion 15 of the lightguide, a first quantum dot layer 16 is deposited. This quantum dot layer comprises a dimming structure, to modify the exterior colour from blue to cyan, to create a visual effect in the user. Finally, in a third portion 21 of the lightguide, a second quantum dot layer 22 is deposited, to change the wavelength of the red light received by this edge portion and transform it into a white light to finish the optical effect of this interior part.

This quantum dot layer may comprise, in some embodiments, quantum dots deposited on a substrate layer, and then the substrate layer with the quantum dots is deposited on the corresponding portion of the lightguide.

As a consequence, with a single LED, a multi-colour light pattern for interior lighting is achieved.

## Claims

1. Automotive luminous device (1, 11) comprising
a light source (2, 12)
an optical element (3, 13) arranged to receive the light emitted from the light source (2, 12) and to project the light in at least two different light projection portions (4, 5, 14, 15, 21)
a wavelength conversion layer (6, 16, 22) arranged at least in one of the light projection portions (4, 5, 14, 15, 21), so that the light emitted by the light source (2, 12) produces two different projections in two different wavelengths.

2. Automotive luminous device according to claim 1, the light source (2, 12) is a solid-state light source configured to emit light in a blue, deep blue or ultraviolet wavelength.

3. Automotive luminous device according to any of the preceding claims, wherein the wavelength conversion layer (6, 16, 22) comprises quantum dots arranged to receive light projected by the optical elements.

4. Automotive luminous arrangement according to claim 3, wherein the quantum dots are deposited on a substrate layer.

5. Automotive luminous device according to any of the preceding claims, wherein the optical element (3, 13) is a lightguide.

6. Automotive luminous device according to claim 5, wherein
the lightguide comprises a lateral surface and an edge surface,
the first light projection portion (4) is at least a portion of the lateral surface of the lightguide, and the second light projection portion (5) is at least a portion of the edge surface of the lightguide
the direction of light projection in the edge surface is perpendicular to any direction of the light projection in the lateral surface.

7. Automotive luminous device according to claim 6, wherein the light source (2, 12) contributes with the edge portion (5) of the lightguide to perform a daytime running lamp functionality.

8. Automotive luminous device according to claim 5, wherein the lightguide comprises a lateral surface, the first light projection portion (14) is a first portion of the lateral surface of the lightguide, and the second light projection portion (15) is a second portion of the lateral surface of the lightguide.

9. Automotive luminous device according to claim 8, wherein the lateral surface of the lightguide comprises a further third portion, and a further second wavelength conversion layer (22) is arranged in the third portion of the lightguide.

10. Automotive luminous device according to any of claims 8 or 9, wherein the light source contributes with the lateral surface of the lightguide to perform an interior lighting functionality.
